# EUROPEAN PATENT APPLICATION

(11) **EP 0 934 769 A1**
(43) Date of publication of application: **11.08.1999**
(21) Application number: 98309403.8
(22) Date of filing: 17.11.1998
(51) Int. Cl.: B01D 33/04, B01D 33/056, B01D 39/08, B01D 39/16

(54) **Filter material for filter belt**

(30) Priority: 18.11.1997 GB 9724242
(71) Applicant: SCAPA GROUP PLC, Blackburn, Lancashire BB2 6AY (GB)
(72) Inventor: Haasmas, Hans Vello Wilhelm, 641 52 Katrineholm (SE)
(74) Representative: Hill, Richard

(57) **Abstract**

A filter belt is described which includes or consists of at least one woven layer of cross-machine direction yarns (10) and machine direction yarns (11), some of the cross-machine direction yarns comprising twisted monofilaments (100), and the remaining cross-machine direction yarns comprising single monofilaments (101). The twisted and single yarns are disposed in a regular alternating pattern, and embodiments are disclosed with single monofilaments and twisted yarns alternating, pairs of twisted yarns alternating with single monofilaments, and pairs of single monofilaments alternating with single twisted yarns.

## Description

This invention relates to improvements in filter belts, such as pulp dewatering belts.

A belt of this kind will normally comprise a woven fabric consisting of cross-machine direction (CMD) weft yarns, with machine direction warp yarns interwoven with the CMD yarns.

Such fabrics tend to be woven from monofilament yarns of synthetic materials. it has been found however that such fabrics are subject to abrasion on the machine side face of the belt, and have a tendency to fibrillate in the press roll nip, which limits the usability of dimensionally stable polyester yarns, and creates a tendency to compaction which impedes the permeability of the belt and increases the risk of failure due to wear.

An object of the invention is to limit the effects of abrasion of the machine side of the belt, and to reduce fibrillation of yarns in the press roll nip.

According to the invention a filter belt for a pulp dewatering machine is characterised in that it consists of or includes at least one woven layer, wherein at least some of the cross-machine direction yarns comprise twisted monofilaments.

The remainder of the woven layer may comprise monofilament yarns.

For example, alternate CMD yarns may be twisted monofilaments. The proportion may however be that two of each three CMD yarns are twisted monofilaments, three out of each four, and so on.

Alternatively, the proportion may be that each third, or fourth etc CMD yarns may be twisted monofilament.

Each twisted monofilament may in its simplest form comprise a pair of monofilaments twisted helically together.

In a preferred example however, three pairs of twisted monofilaments may be further twisted together, or braided.

Preferably the twisted monofilament CMD yarns are greater in diameter than the single monofilament yarns, so that the twisted yarns will be preferentially subjected to wear on the machine side.

The individual monofilaments for the CMD yarns may be polyester (e.g. PET, PBT or PEN), copolyester (e.g. PCTA), polyolefin (e.g. polyethylene or polypropylene), PEEK, PPS, Synalloy (Trade Mark of Syn Strand Inc.) or polyamide (e.g. PA6, PA6.6, PA6.10, PA11 or PA12). These yarns may be preferably of round cross-section and O.5-1.2mm in diameter. The machine direction (MD) yarns may be round cross-section yarns of the above mentioned materials, and e.g. 0.4-1.2mm in diameter. The twisted monofilament CMD yarns may be e.g. about 1.15mm in diameter.

Preferred examples of the invention will now be described by way of example, with reference to the accompanying drawings wherein:-
Fig. 1 is a fragmentary enlarged view of a piece of a fabric forming part of a belt according to the invention;
Fig. 2 is a weave diagram of the fabric of fig 1; and
Figs. 3 and 4 are weave diagram of alternative fabrics for forming part of a belt according to the invention.

in accordance with the invention, a filter belt consists of a woven layer made up of a very large number of cross-machine direction (CMD) yarns 10, and machine direction (MD) yarns 11, interwoven through the CMD yarns 10.

In accordance with the invention some of the CMD yarns 10 comprise twisted monofilament yarns 100, the remainder being single monofilament yarns 101.

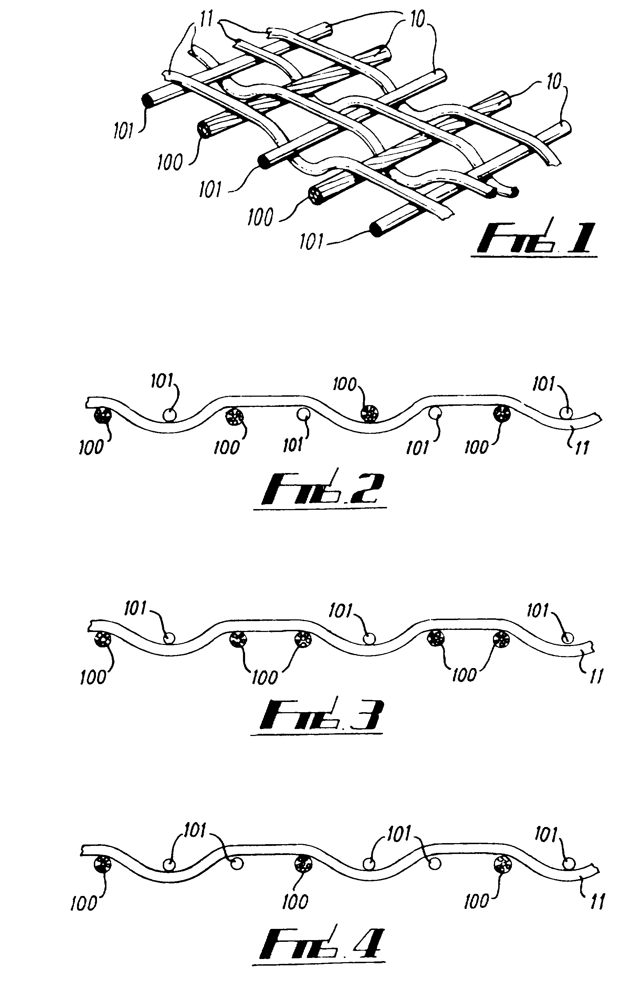

In Figs 1 and 2, half single monofilament yarns 101, the two types of yarns being arranged alternately. The MD yarns 11 are dispersed in a weave pattern whereby they float over two CMD yarns on the upper (paper/pulp) side of the fabric and below one CMD yarn on the lower (machine) side of the fabric, without regard to the arrangement of twisted and single CMD yarns.

The single monofilament yarns 101 are round sectioned yarns of 0.5-1.2mm in diameter, whilst the twisted monofilament CMD yarns 100 are comprised of three pairs of twisted 0.35mm diameter monofilaments twisted together to form a twisted yarn of 1.15mm diameter.

The MD yarns 11 are round yarns of 0.4-1.2mm diameter.

The yarns may be of a material selected from polyester (e.g. PET, PBT or PEN), copolyester (e.g. PCTA), polyolefin (e.g. polyethylene or polypropylene), PEEK, PPS, Synalloy (Trade Mark of Syn Strand Inc.) or polyamide (e.g. PA6, PA6.6, PA6.10, PA11 or PA12).

The twisted yarns 100 are preferably always greater in diameter than the single monofilament yarns 101 so that the twisted yarns will be preferentially subject to wear in the machine side of the fabric.

Fig 3 illustrates an alternative fabric in a filter belt wherein two of every three CMD yarns 10 are twisted monofilaments 100, every third yarn being a single monofilament 101.

Fig 4 illustrates a converse alternative fabric in filter belt wherein one of every three CMD yarns 10 are twisted monofilaments 100, two out of each three yarns being single monofilaments 101.

The diameters and materials of yarns used in Figs 3 and 4 are selected from the same parameters as those of fig 1 and 2.

The invention is primarily intended for use in filter belts such as pulp dewatering belts in paper making machinery, but may be applied to any papermachine clothing incorporating a woven textile layer or substrate, or to filter cloths or other industrial fabrics.

It has been found that belts according to the invention afford improved abrasion resistance on the machine side of the belt, and improved compaction resistance as the twisted yarns have a reduced tendency to fibrillate in the press roll nip, so that dimensionally stable polyester yarns can be used. A further important advantage is that the filter belts can be woven from yarns comprising materials more dimensionally stable and less likely to swell due to water absorption than polyamide.

## Claims

1. A filter belt for a pulp dewatering machine comprising at least one woven layer, wherein the cross-machine direction yarns comprise single monofilament yarns and twisted monofilament yarns disposed in a regular alternating pattern.

2. A filter belt according to claim 1 wherein alternate cross-machine direction yarns are twisted monofilaments.

3. A filter belt according to claim 1 wherein two of each three cross-machine direction yarns are twisted monofilaments.

4. A filter belt according to claim 1 wherein one of each three cross-machine direction yarns are twisted monofilaments.

5. A filter belt according to any preceding claim wherein each twisted monofilament comprises a pair of monofilaments twisted together helically.

6. A filter belt according to any of claims 1 to 4 wherein each twisted monofilaments comprises three pairs of twisted monofilaments further twisted together or braided.

7. A filter belt according to any preceding claim wherein the twisted monofilament cross-machine direction yarns are greater in diameter that the single monofilament yarns.

8. A filter belt according to any preceding claim wherein the monofilament for the cross-machine direction yarns are of a material selected from the group comprising:- polyesters; co-polyesters; polyolefins; PEEK; PPS; Synalloy(Trade Mark); or polyamide.

9. A filter belt for a pulp dewatering machine substantially as hereinbefore described with reference to and as illustrated in Fig 1 and 2, or Fig 3 or 4 of the accompanying drawings.
